# EUROPEAN PATENT APPLICATION

(11) **EP 1 959 648 A2**
(43) Date of publication of application: **20.08.2008**
(21) Application number: 08250539.7
(22) Date of filing: 14.02.2008
(51) Int. Cl.: H04M 1/02, H04M 1/23

(54) **Foldable portable terminal**

(30) Priority: 14.02.2007 KR 20070015339
(71) Applicant: Samsung Electronics Co., Ltd., Suwon-si Gyeonggi-do (KR)
(72) Inventor: Cho, Yoon-Young, Suwon-si, Gyeonggi-do (KR); Lee, Chang-Soo, Suwon-si, Gyeonggi-do (KR)
(74) Representative: Boakes, Jason Carrington

(57) **Abstract**

The portable terminal (100) includes a body housing (102), a cover housing (101), an image display device (111), and a functional keypad (121). The cover housing is coupled to the body housing so that the cover housing moves from a state in which the cover housing is folded to face the body housing and to a state in which the cover housing is away from the body housing. The image display device is arranged in the cover housing to display image information on two surfaces (111a,111b) of the cover housing. The functional keypad is arranged in the body housing and is exposed when the cover housing is folded on the body housing.

## Description

The present invention relates to a portable terminal, and more particularly, but not exclusively, to a portable terminal having a cover housing, which may be folded toward or away from a body housing, coupled to the body housing.

Generally, portable terminals may be classified as bar-type, flip-type, folder-type, or sliding-type terminals according to their appearances.

The bar-type terminal has a single body housing, on which data input/output means and transmitter/receiver units are arranged. Such a terminal generally includes a keypad as its data input means. The keypad is always exposed which makes it likely that the bar-type terminal will be operated erroneously. Also, because the transmitter unit and receiver unit should be spaced apart by a minimum distance, it may be difficult to manufacture compact bar-type terminals.

The flip-type terminal has a body, a flip, and a hinge module coupling the body and the flip to each other. In the flip-type terminal, the body has data input/output units and transmitter/receiver units arranged therein, and the flip covers the keypad used as the data input units, thereby preventing erroneous operation. However, it may also be difficult to manufacture this terminal to have a compact size because the distance between the transmitter unit and receiver unit should be maintained.

The folder-type terminal has a body, a folder, and a hinge module coupling the body and the folder to each other. The folder-type terminal may be opened and closed by folding and unfolding the folder, thereby preventing erroneous operation of the keypad when the terminal is in a standby mode in which the folder is folded on the body. Also, the folder is unfolded in the calling mode so as to provide a sufficient distance between the transmitter unit and receiver unit. Thus, the folder-type terminal may have a beneficial advantage in that it may be designed as compact as possible. An output device such as a display is installed on the folder.

In addition, sliding-type terminals have recently appeared which have a pair of housings slidably coupled to each other. The sliding-type terminal has a structure in which one of the housings slides the other housing away from an overlapped state of the housings and opens a part of the other housing.

Mobile communication services using the portable terminal were previously restricted to voice calls and text message transmissions, but have gradually extended to include entertainment services, such as games, caricatures, bell sounds, etc., and multimedia services, such as moving pictures, videos on demand, etc. Broadcasting services, such as a terrestrial or satellite Digital Multimedia Broadcasting (DMB), have become available through the portable terminal and watching DMB through the portable terminal has become popular.

Due to the popularity of the portable terminal for receiving DMB, considerable efforts have been devoted to provide a horizontally long screen to watch DMB. The displays of portable terminals for receiving DMB may be rotated on the portable terminals in order to provide the horizontally long screens regardless of the structures of the portable terminals.

However, in order to rotate the display of the folder-type terminal, an additional hinge device may be needed in addition to the hinge device to fold the housings together. The additional hinge device may render the portable terminal thicker and thus may negatively affect miniaturization and good appearance of the terminal. Also, the additional hinge device may increase the number of parts in the terminal, thereby increasing manufacturing costs and process complexity. Furthermore, it may be inconvenient for a user to have to rotate the display of the housing after it is away from the other housing in order to use the horizontally long screen.

It is an aim of the present invention to at least partly mitigate the above-mentioned problems.

It is an aim of embodiments of the present invention to provide a portable terminal that may conveniently provide horizontally long pictures without an additional hinge device.

It is an aim of embodiments of the present invention to provide a portable terminal that may have a miniaturized structure and good appearance.

It is an aim of embodiments of the present invention to provide a portable terminal that may reduce manufacturing costs and simplify the manufacturing process.

Additional features of the invention will be set forth in the description which follow, and in part will be apparent from the description, or may be learned by practice of the invention.

According to a first aspect of the present invention there is provided a portable terminal including a body housing, a cover housing coupled to the body housing, an image display device, and a functional keypad. The cover housing moves from a state in which the cover housing is folded to face the body housing to a state in which the cover housing is away from the body housing. The image display device is arranged in the cover housing and displays image information on two surfaces of the cover housing. The functional keypad is arranged in the body housing and is exposed so when the cover housing is folded on the body housing.

According to a second aspect of the present invention there is provided a portable terminal, comprising:
a body housing;
a cover housing coupled to the body housing, the cover housing being moveable from a state in which the cover housing is folded to face the body housing to a state in which the cover housing is away from the body housing;
an image display device arranged in the cover housing, the image display device to display image information on two surfaces of the cover housing; and
a functional keypad arranged in the body housing, the functional keypad being exposed when the cover housing is folded on the body housing.

It is to be understood that both the foregoing general description and the following detailed description are exemplary and explanatory and are intended to provide further explanation of the invention as claimed.

The accompanying drawings, which are included to provide a further understanding of the invention and are incorporated in and constitute a part of this specification, illustrate embodiments of the invention given by way of example only, and together with the description serve to explain the principles of the invention.
FIG. 1 is a perspective view of a portable terminal according to an exemplary embodiment of the present invention.
FIG. 2 is a perspective view showing the portable terminal of FIG. 1 in an unfolded state in which a cover housing has moved away from a body housing.
FIG. 3 is a plan view of the portable terminal shown in FIG. 1.
FIG. 4 is a bottom view of the portable terminal shown in FIG. 1.
FIG. 5 is a left side view of the portable terminal shown in FIG. 1.
FIG. 6 is a plan view of the portable terminal shown in FIG. 2.

The invention is described more fully hereinafter with reference to the accompanying drawings, in which embodiments of the invention are shown. This invention may, however, be embodied in many different forms and should not be construed as limited to the embodiments of the embodiments set forth herein. Rather, these embodiments are provided so that this disclosure is thorough and will fully convey the scope of the invention to those skilled in the art. Like reference numerals in the drawings denote like elements.

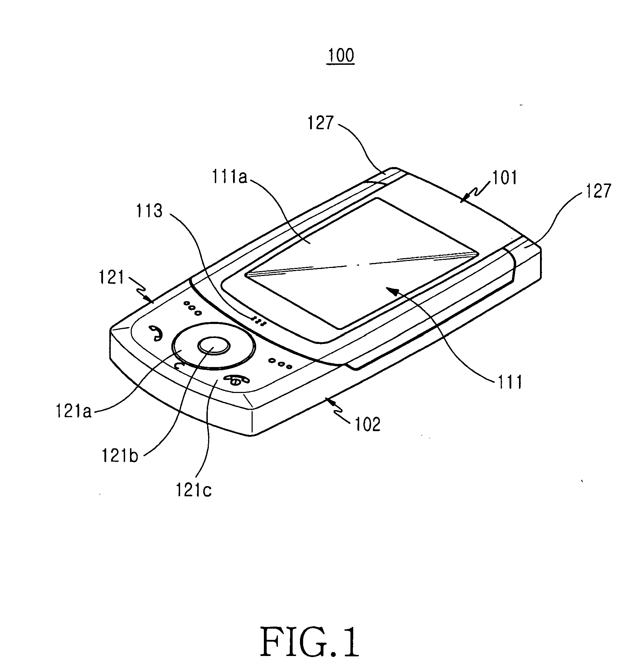

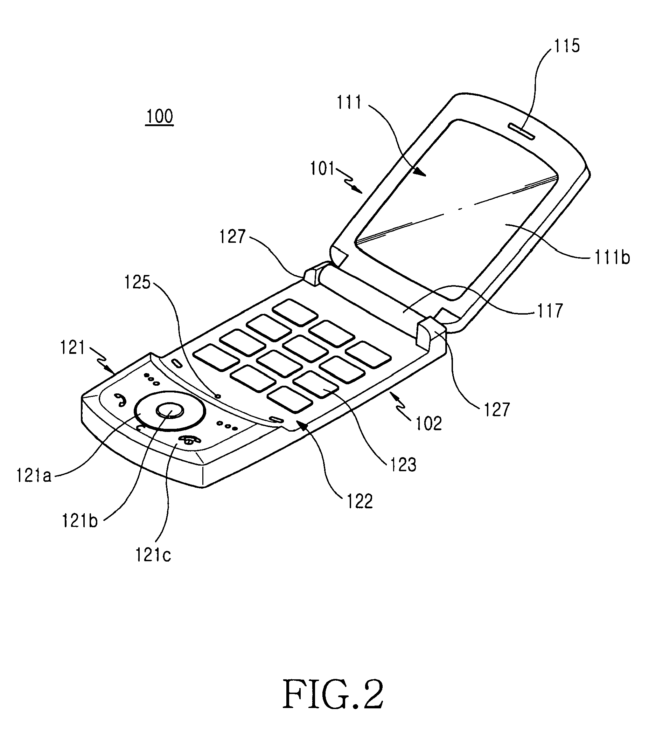

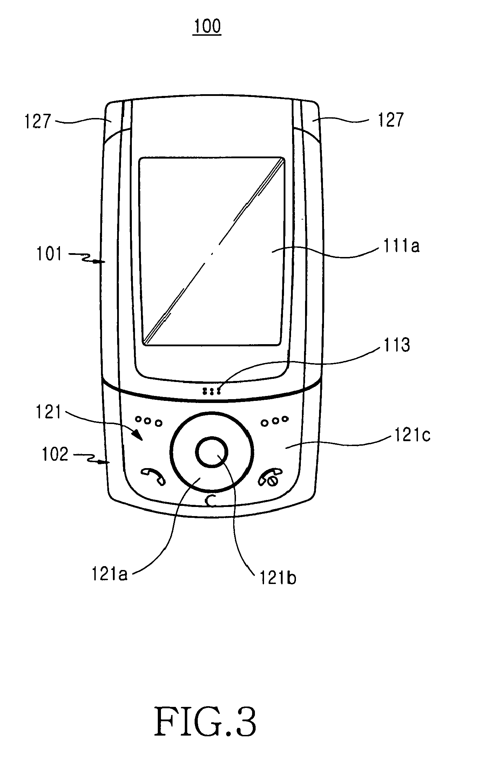

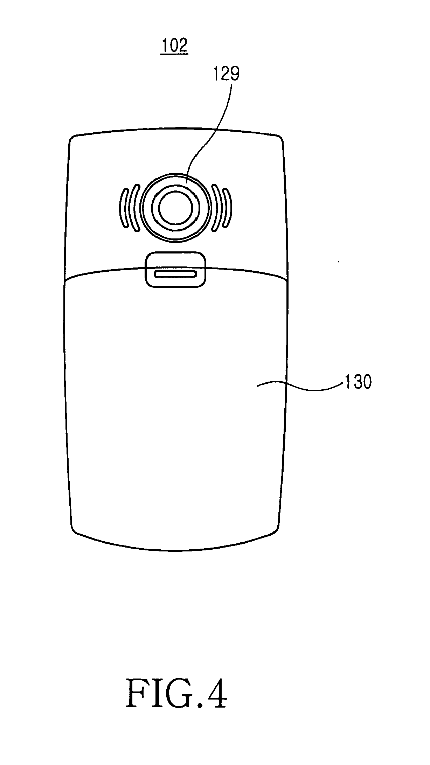

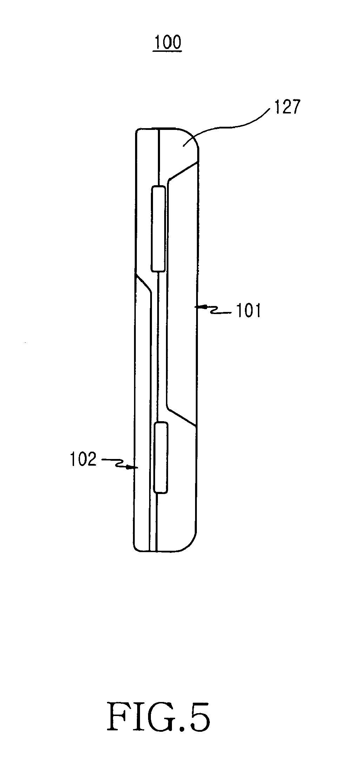

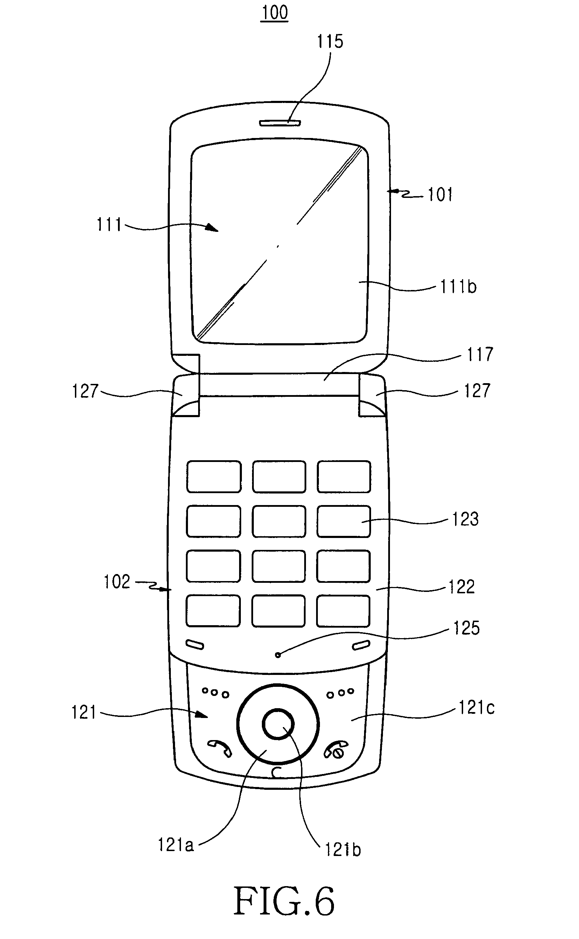

FIG. 1 is a perspective view of a portable terminal 100 according to an exemplary embodiment of the present invention. FIG. 2 is a perspective view showing the portable terminal 100 of FIG. 1 in an unfolded state in which a cover housing 101 has moved away from a body housing 102. FIG. 3, FIG. 4, and FIG. 5 are a plan view, a bottom view, and a left side view, respectively, of the portable terminal shown in FIG. 1. FIG. 6 is a plan view of the portable terminal shown in FIG. 2. As shown in FIG. 1, FIG. 2, FIG. 3, FIG. 4, FIG. 5, and FIG. 6, the portable terminal 100 includes a cover housing 101 and a body housing 102.

The cover housing 101 is coupled to the body housing 102, so the cover housing 101 is folded on and may unfold from the body housing 102. The cover housing 101 includes an image display device 111, a speaker device 113, and a receiver unit 115.

The image display device 111 may be a liquid crystal display (LCD), an organic electroluminescent display (OLED), etc. When the cover housing 101 is folded on the body housing 102, an outer surface 111a of the image display device 111 is exposed, and an inner surface 111 b of the image display device 111 faces the body housing 102 and thus, the portable terminal 100 is closed. When the cover housing 101 unfolds from the body housing 102, the inner surface 111b of the image display device 111 is exposed.

The outer surface 111a of the image display device 111 may display state information of the portable terminal 100 that is not related to the manipulation of the portable terminal 100, such as the current time and data transmission/reception information. In addition, when the cover housing 101 is away from the body housing 102, state information of the portable terminal 100, data transmission/reception information, and contents of received text messages, for example, may be displayed on the inner surface 111b of the image display device 111. Image information, such as moving pictures, video on demand, or digital multimedia broadcasting may also be displayed on the inner surface 111 b of the image display device 111.

When the cover housing 101 is folded on the body housing 102, the image information may be displayed through the outer surface 111a of the image display device 111. When the cover housing 101 is away from the body housing 102, the image information may be displayed through not only the outer surface 111a of the image display device 111, but also the inner surface 111 b of the image display device 111. When the image information is displayed on both the outer surface 111a and the inner surface 111b of the image display device 111, either the same image information may be displayed on both surfaces 111a and 111 b or the outer surface 111a and the inner surface 111b may display different image information, according to a user setting. In addition, it may also be possible, through a user setting, to display image information on only one of the surfaces of the image display device 111.

The speaker device 113 outputting sound is arranged on the outer surface of the cover housing 101, adjacent to the image display device 111. For example, the speaker device 113 may output signal tones, such as a bell sound when a text message is received or a call request is generated. When image information, such as a moving picture or digital multimedia broadcasting is displayed on the outer surface 111a of the image display device 111, the speaker device 113 may also output sounds corresponding to the image information. That is, the speaker device 113 may output sounds that are stored together with the image information to be displayed through the image display device 111. In addition, since the speaker device 113 is disposed on the outer surface of the cover housing 101 and thus is always exposed, it may output sounds regardless of the location of the cover housing 101.

The receiver unit 115 is arranged on the inner surface of the cover housing 101 and is adjacent to the image display device 111. Thus, the receiver unit 115 is closed when the cover housing 101 is folded on the body housing 102. When the cover housing 101 is away from the body housing 102, the receiver unit 115 is exposed and thus, can output sounds. The receiver unit 115 provides a voice of another party to the user by outputting it during a voice call using the portable terminal 100.

The body housing 102 may be closed or opened by folding or unfolding the cover housing 101. The body housing 102 has a functional keypad 121, a mounting section 122, a keypad 123, a transmitter unit 125, and a camera lens 129.

The functional keypad 121 is arranged on the body housing 102, is exposed so as to always be manipulable, and includes a wheel key 121a, a first key 121b, and a second key 121c.

The wheel key 121 a is rotatably mounted on the body housing 102 so as to rotate in either a clockwise direction or a counterclockwise direction. The user rotates the wheel key 121a to select menus or channels of the portable terminal 100. At this time, the first key 121b may be disposed in a center of the wheel key 121a. A menu or channel selected by the wheel key 121a may be executed by manipulating the first key 121b. In addition, when the functional keypad 121 is manipulated while the cover housing 101 is folded on the body housing 102, the image display device 111 may display the image information on the outer surface 111a thereof. The second key 121 c is disposed around the wheel key 121a and may include a menu access key, a find key, a call start/end key, etc.

When the image information is displayed on the outer surface 111 a of the image display device 111, the user may manipulate the second key 121c to output a list to allow the user to select a menu or a channel on the screen. At this time, the user may rotate the wheel key 121 a and select a desired menu or channel while looking at menus or channels displayed on the outer surface 111a of the image display device 111. Then, the user may execute the menu or channel by manipulating the first key 121b.

In addition, when the image information, such as a moving picture, a video on demand, digital multimedia broadcasting, etc., is displayed through the outer surface 111a of the image display device 111, the first key 121b may be used to control the playback speed or the sound volume of the image information.

The mounting section 122 includes a recessed shape formed on the body housing 102, which corresponds to the cover housing 101, whereby the cover housing 101 may be received in the mounting section 122 when folded on the body housing 102.

When folded, an inner surface of the cover housing 101 faces the mounting section 122 and the outer surface of the cover housing 101 is positioned to be even with the functional keypad 121. The keypad 123 formed on the mounting section 122 has a plurality of keys, which may include a 3 x 4 array, that are used to input numerals and characters, so the keypad 123 may be used to input phone numbers or transmit text messages. When the cover housing 101 is received in the mounting section 122, the keypad 123 faces the inner surface of the cover housing 101 and thus the portable terminal 100 is closed. As the cover housing 101 unfolds from the body housing 102, the keypad 123 is gradually exposed to be in a manipulable state. At the same time, the inner surface 111b of the image display device 111 is exposed. Inputs generated by manipulating the keypad 123 may be displayed on the inner surface 111b of the image display device 111. Therefore, the user may manipulate the keypad 123 while viewing the inner surface 111b of the image display device 111.

The transmitter unit 125 is arranged adjacent to the image display device 111. Therefore, the transmitter unit 125, together with the image display device 111, may be exposed or covered by the movement of the cover housing 101. In addition, a voice of the user that is intended to be transferred to another party may be input through the transmitter unit 125.

When the cover housing 101 is folded on the body housing 102, the transmitter unit 125 and the receiver unit 115 are covered. The transmitter unit 125 and the receiver unit 115 are exposed when the cover housing 101 unfolds from the body housing 102. At this time, the transmitter unit 125 and the receiver unit 115 are such that they can be positioned adjacent to a mouth and ear of a user, respectively. Therefore, the transmitter unit 125 and the receiver unit 115 may provide a voice call.

The camera lens 129 is arranged in the body housing 102 and is always manipulable. Photographic images of subjects may be displayed through the image display device 111. The photographic images of subjects may be displayed on the outer surface 111 a of the image display device 111 when the cover housing 101 is folded on the body housing 102, whereas the photographic images of subjects may be displayed on the inner surface 111b of the image display device 111 when the cover housing 101 is away from the body housing 102. That is, the image display device 111 may display the photographic images of subjects on the outer surface 111a or the inner surface 111b thereof depending on whether the portable terminal 100 is opened or closed. Therefore, the user may use the camera lens 129 while monitoring images of subjects to be photographed through the image display device 111. A battery pack(130) is adjacent to the camera lens(129) and installed on the body housing(101). And the battery pack(130) supplies a power to the portable terminal(100).

In addition, although not shown in the drawings, a Digital Multimedia Broadcasting (DMB) module may be built in one of the cover housing 101 and the body housing 102. The DMB module receives the image information. At this time, the received image information may be displayed through the image display device 111 and sounds embedded together with the image information may be output through the speaker device 113. In addition, the cover housing 101 is folded on the body housing 102, the image information may be displayed through the outer surface 111a of the image display device 111, whereas in the unfolded state in which the body housing 102 is away from the image display device 111, the image information may be displayed through the inner surface 111b of the image display device 111. Further, a user may select a channel of the image information by manipulating the functional keypad 121, specifically, by rotating the wheel key 121a. Therefore, the user may view DMB regardless of whether the portable terminal 100 is opened or closed.

The image display device 111 provides the user with various information, such as the state information of the portable terminal 100, text messages, photographic images of subjects, and DMB. Further, the image display device 111 may output vertically long pictures when displaying, for example, the state information of the portable terminal 100 and text messages. The image display device 111 also may output vertically long pictures on the outer surface 111a thereof when the portable terminal 100 is in the folded state in which the cover housing 101 is folded on the body housing 102. At this time, a user may rotate the portable terminal 100 so that the outer surface 111a of the image display device 111 is arranged to be horizontally long, and then the user may change the setting by manipulating the functional keypad 121 so that the image display device 111 properly displays horizontally long images. The image display device 111 may selectively provide horizontally long images or vertically long pictures according to the operation mode of displaying images on the outer surface 111a thereof. For example, stored music file lists may be output in the form of a vertically long image, and broadcasting pictures in the multimedia mode may be output in the form of the horizontally long image. Therefore, a user may arrange the image display device 111 to be horizontally long or vertically long according to the operation mode of the portable terminal 100.

The cover housing 101 has a center hinge arm 117 formed therein. The body housing 102 has side hinge arms 127 formed therein, which are spaced apart from each other and face each other. Also, the center hinge arm 117 is disposed between and coupled to the side hinge arms 127, thereby forming a folding axis extending in one direction. Hence, the cover housing 101 folds and unfolds about the folding axis either to face the body housing 102 or to be away from the body housing 102. Here, a hinge device (not shown) is disposed between the cover housing 101 and the body housing 102. A portion of the hinge device may be disposed in the cover housing 101 and the rest of the hinge device may be disposed in the body housing 102. So, the hinge device may provide a driving force that acts in the direction in which the cover housing 101 moves when it is being folded onto the body housing 102 or in the direction in which the cover housing 101 moves when it is unfolded from the body housing 102.

When the cover housing 101 is folded on the body housing 102, the cover housing 101 is received in the mounting section 122. In this case, the cover housing 101 faces the mounting section 122 and thus, covers the keypad 123 and the transmitter unit 125. The inner surface 111b of the image display device 111 and the receiver unit 115, which are disposed in the inner surface of the cover housing 101, are also covered.

When the cover housing 101 is folded on the body housing 102, the outer surface 111a of the image display device 111 may be positioned adjacent to the functional keypad 121. In addition, the outer surface 111a of the image display device 111 may be activated by manipulating the functional keypad 121, specifically, the first key 121b. For the execution of a certain menu or channel, a user may manipulate the second key 121 c to display a list of the menu or channel on the screen. The user may then manipulate the wheel key 121a to select the menu or channel and manipulate the first key 121b to execute the menu or channel. In this way, various information may be selectively displayed on the outer surface 111a of the image display device 111.

When the cover housing 101 is folded on the body housing 102, a user may rotate the portable terminal 100 and then manipulate the keypad 123 according to the operation mode, so that image information may be displayed on the outer surface 111a of the image display device 111 in either a portrait mode or a landscape mode. At this time, sounds embedded together with the image information may be output through the speaker device 113. In this way, the portable terminal 100 may provide the user with not only the image information, such as the state information thereof, the current time, etc., but also the image information, such as a photographic image of a subject, a moving picture, VOD, digital multimedia broadcasting, etc.

When the cover housing 101 unfolds from the body housing 102, the keypad 123 and the transmitter unit 125, which are arranged in the mounting section 122, are exposed and the inner surface of the cover housing 101 is exposed as well.

Since the keypad 123 is when the cover housing 101 is away from the body housing 102, the keypad 123 is manipulable. Also, the signal values generated by manipulating the keypad 123 are displayed on the inner surface 111b of the image display device 111. Therefore, the user may confirm values, which are input through the keypad 123, through the inner surface 111b of the image display device 111 while manipulating the keypad 123.

When the cover housing 101 unfolds from the body housing 102, the receiver unit 115 is exposed. At this time, the user may position the receiver unit 115 and the transmitter unit 125 adjacent to the user's ear and mouth, respectively, and then may perform a voice call.

Both surfaces of the image display device 111 are also exposed when both surfaces of the cover housing 101 are exposed. At this time, similarly to in the folded state in which the cover housing 101 is folded on the body housing 102, the image display device 111 may display image information on the outer surface 111a thereof. It is also possible for the image display device 111 to display image information on the inner surface 111b thereof. Further, according to the user setting, the image display device 111 may display either the same image or different images on the outer surface 111a and the inner surface 111 b thereof.

Furthermore, it is also possible, according to the user setting, for the image display device 111 to display image information only on one of the inner and outer surfaces 111a and 111b.

As described above, the portable terminal according to exemplary embodiments of the present invention includes a cover housing and a body housing that are coupled to each other so that the housings may be folded together or away from each other. The cover housing may include an image display device that may display information on two of its surfaces and a body housing that may include a functional keypad that is exposed so as to be always manipulable. Both the image display device and the functional keypad may always be exposed. That is, even in the folded state in which the cover housing is folded on the body housing, the image information may be visibly displayed through the image display device and the functional keypad may be in an always available state.

Accordingly, the user may simply and conveniently see image information even when the portable terminal is closed. In addition, by using the functional keypad, a user may select image information displayed through the image display device and set the image display device to provide horizontally long images or vertically long images.

Also, an additional hinge device to provide the horizontally long screen or vertically long screen for displaying the image information of the image display device may not be required. Therefore, the thickness and design of the portable terminal may not be affected by the hinge device, which may allow for miniaturization and good appearance of the portable terminal to be achieved. In addition, the manufacturing costs required to manufacture the hinge device may be reduced and then the manufacturing process of the hinge device may be simplified.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. A portable terminal, comprising:
a body housing;
a cover housing coupled to the body housing, the cover housing being moveable from a state in which the cover housing is folded to face the body housing to a state in which the cover housing is away from the body housing;
an image display device arranged in the cover housing, the image display device to display image information on two surfaces of the cover housing; and
a functional keypad arranged in the body housing, the functional keypad being exposed when the cover housing is folded on the body housing.

2. The portable terminal of claim 1, wherein the body housing comprises:
a mounting section having a recessed shape formed corresponding to the cover housing; and
a keypad arranged on the mounting section, the keypad having a plurality of keys,
wherein the cover housing is receivable in the mounting section when folded on the body housing, thereby covering the keypad.

3. The portable terminal of claim 2, wherein the keypad is exposed when the cover housing unfolds from the body housing.

4. The portable terminal of claim 3, wherein an input generated by manipulating the keypad is displayed on an inner surface of the image display device.

5. The portable terminal of claim 1, wherein when the cover housing is folded on the body housing,
an outer surface of the image display device and the functional keypad are positioned adjacent to each other, and
image information determined according to manipulations of the functional keypad is displayed on the outer surface of the image display device.

6. The portable terminal of claim 1, further comprising:
a camera lens arranged in the body housing,
wherein photographic images are displayed on an outer surface of the image display device when the cover housing is folded on the body housing.

7. The portable terminal of claim 1, further comprising:
a digital multimedia broadcasting module in one of the cover housing and the body housing,
wherein broadcasting signals received through the digital multimedia broadcasting module are displayed on an outer surface of the image display device when the cover housing is folded on the body housing.

8. The portable terminal of claim 6, wherein the image display device selectively provides horizontally long pictures or vertically long pictures when the cover housing is folded on the body housing.

9. The portable terminal of claim 7, wherein the image display device selectively provides horizontally long pictures or vertically long pictures when the cover housing is folded on the body housing.

10. The portable terminal of claim 1, further comprising:
a speaker device arranged on an outer surface of the cover housing, the speaker device being adjacent to the image display device,
wherein the speaker device outputs sound signals provided by the portable terminal.

11. The portable terminal of claim 1, further comprising:
a receiver unit arranged on an inner surface of the cover housing, the receiver unit being adjacent to the image display device; and
a transmitter unit arranged on the body housing, the transmitter unit being adjacent to the functional keypad,
wherein the receiver unit in cooperation with the transmitter unit provides a voice call when the cover housing is away from the body housing.

12. The portable terminal of claim 1, further comprising:
a hinge device disposed between the cover housing and the body housing,
wherein the hinge device provides a driving force acting in one of a direction in which the cover housing moves when it is being folded onto the body housing and a direction in which the cover housing moves when it is being unfolded from the body housing.

13. The portable terminal of claim 1, wherein the functional keypad comprises:
a wheel key rotatably disposed on the body housing;
a first key disposed in a center of the wheel key; and
a second key disposed around the wheel key.

14. The portable terminal of claim 13, wherein the wheel key rotates in one of a counterclockwise direction and a clockwise direction to allow menus or channels of the portable terminal to be selected, and
wherein a menu or a channel selected by the wheel key is executed when the first key is manipulated.
